# DEMANDE DE BREVET EUROPEEN

(11) **EP 2 241 841 A1**
(43) Date de publication de la demande: **20.10.2010**
(21) Numéro de dépôt: 09005506.2
(22) Date de dépôt: 17.04.2009
(51) Int. Cl.: F24J 2/04, F24J 2/52, F24J 2/46, F24J 2/51

(54) **Collecteur isolant moulé**

(71) Demandeur: Sumika Polymer Compounds (France) SA, 13310 Saint Martin de Crau (FR)
(72) Inventeur: Nishio, Hideaki, Portsmouth, PO1 3TH (GB); Gaaloul, Enis, 13310 Saint Martin de Crau (FR); Bollaert, Franck, 30000 Nimes (FR)
(74) Mandataire: Galup, Cédric Olivier Nicolas

(57) **Abrégé**

Collecteur isolant moulé et particulièrement collecteur isolant moulé pour panneaux solaires thermiques ou photovoltaïques, comprenant un cadre (11) intégrant un isolant (12).

## Description

L'invention se place dans le domaine des collecteurs moulés en matériaux plastiques moussés, isolants ou non, pour la réalisation d'équipements solaires de faible poids et particulièrement pour les collecteurs de type caisson plat/coffre ou pour les collecteurs de type parabolique.

Les panneaux solaires sont les composants de base de la plupart des équipements de production d'énergie solaire. Un panneau solaire est un dispositif destiné à récupérer une partie de l'énergie du rayonnement solaire pour la convertir en énergie électrique ou thermique utilisable.

On distingue deux types de panneaux solaires :
- les panneaux solaires thermiques, ou capteurs solaires thermiques, qui convertissent la lumière en chaleur récupérée et utilisée sous forme d'eau chaude ;
- les panneaux solaires photovoltaïques, ou modules photovoltaïques, qui convertissent la lumière en électricité.

Dans les deux cas, les panneaux sont habituellement plats ou paraboliques, d'une surface allant de plus ou moins le mètre-carré à plusieurs mètre-carré (par exemple 2 à 6 mètre-carré). Les dimensions standards sont généralement définies pour faciliter et optimiser la pose.

Il existe deux types de panneaux solaires thermiques : les capteurs à eau et les capteurs à air.

Dans les capteurs thermiques "à eau", l'eau ou plus souvent un fluide caloporteur (à base de glycol par exemple), circule dans des tubes en circuit fermé. Pour obtenir un meilleur rendement, l'ensemble est placé dans un collecteur vitré isolant afin d'obtenir un effet de serre.

Dans les capteurs thermiques "à air", de l'air circule et s'échauffe au contact des absorbeurs. L'air ainsi chauffé est ensuite ventilé dans les habitats pour le chauffage ou par exemple dans des hangars agricoles pour le séchage des productions. L'utilisation d'un collecteur permet là encore d'obtenir un meilleur rendement.

La technologie du solaire thermique peut être utilisée pour d'autres applications que le chauffage de locaux telles que par exemple le réchauffement de fluides dans des installations industrielles par exemple des sites de production chimique, la climatisation de locaux par voie solaire, ou encore la désalinisation de l'eau de mer.

Les panneaux solaires photovoltaïques regroupent des cellules photovoltaïques reliées entre elles, en série ou en parallèle. Ne serait-ce que pour des raisons de solidité, ces panneaux comprennent aussi généralement un collecteur.

Certains nouveaux concepts de capteurs peuvent être de type hybride (thermique et photovoltaïque).

Ainsi, les panneaux solaires sont généralement constitués d'un élément actif (cellules photovoltaïques ou circuit de circulation d'eau ou d'air) positionné dans un collecteur, ledit collecteur étant éventuellement isolant.

Actuellement la réalisation des collecteurs isolants utilisés dans les panneaux solaires thermiques demande l'assemblage d'au moins 6 éléments indépendants que sont un coffre, généralement formé d'un cadre en aluminium ou en métal, un isolant, avantageusement en laine de verre, un circuit de circulation de fluide (eau ou glycol), généralement accouplé à un absorbeur de chaleur, lui-même généralement constitué d'une plaque de métal, ledit absorbeur pouvant être lui-même recouvert d'une matière améliorant ses performances, et une plaque de verre.

L'assemblage des différents éléments constitutifs d'un tel panneau solaire en augmente sensiblement le coût ainsi que le poids. De plus la multiplication du nombre d'éléments de base assemblés peut entraîner l'apparition de ponts thermiques et/ou de gradients thermiques dans la structure du collecteurs qui peuvent avoir des conséquences indésirables comme par exemple la déformation de l'ensemble, qui peut conduire à des défauts d'étanchéité, l'apparition de buée sur la vitre ou des pertes thermiques, qui vont affecter les performances de l'équipement.

II s'avère donc intéressant de pouvoir fournir un nouveau collecteur moulé ne présentant pas les inconvénients des collecteurs connus de l'art antérieur. C'est un des objectifs de l'invention que de proposer un tel collecteur. Un autre objectif de l'invention est de fournir un collecteur moulé en matériaux plastiques moussés, isolants ou non. Eventuellement ledit collecteur moulé pourra en outre comprendre d'autres éléments intégrés, par exemple en plastiques et éventuellement des fonctions intégrées.

On comprend donc que selon l'invention, le collecteur peut être réalisé de telle sorte qu'il soit en plastique monobloc, éventuellement isolant.

Ainsi l'invention a pour objet un collecteur moulé, avantageusement monobloc, éventuellement isolant, **caractérisé en ce qu**'il est au moins en partie réalisé par moulage d'un matériau plastique isolant expansible.Selon une première forme de réalisation particulière, ledit collecteur de l'invention peut prendre la forme d'un parallélépipède, régulier ou non, comprenant un fond et quatre côtés. Selon une première variante de cette première forme de réalisation, le collecteur peut comprendre un cadre (formant les côtés du collecteur) en matière plastique, éventuellement expansible, sur lequel vient s'appliquer un fond constitué d'une plaque réalisée par moulage d'un matériau plastique isolant expansible.

Selon une seconde variante de cette première forme de réalisation le collecteur est monobloc. Par monobloc on entend selon l'invention, que le cadre (les côtés) et le fond sont une seule pièce réalisée par moulage d'un matériau plastique isolant expansible.

Selon une seconde forme de réalisation de l'invention, ledit collecteur peut prendre la forme d'une parabole, à tout le moins d'une plaque courbée selon l'un au moins de ces axes.

Les collecteurs de l'invention rendent possible l'obtention de panneaux solaires thermiques ne comprenant que trois éléments majeurs, le collecteur isolant selon l'invention, le circuit de circulation d'eau, et la plaque translucide, avantageusement en verre.

Selon l'invention, ledit matériau isolant peut être toute matière plastique expansible, particulièrement une matière plastique dont l'expansion pourra intervenir en cours de moulage.

A cet égard on citera à titre d'exemple les matières plastiques pouvant comprendre un ou plusieurs polymères choisies parmi le polypropylène (PP), le polyéthylène (PE), le polyamide aliphatique ou aromatique (PA), le mélange de polyphénylène éther (tel que l'alliage polyphénylène éther/polystyrène/butadiène (PPE/PS), l'alliage polyphénylène éther/polyphénylène sulfone (PPE/PPS), l'alliage polyphénylène éther/polypropylène (PPE/PP), l'alliage polyphénylène éther/polyamide (PPE/PA), le polyéthersulfone (PES), le polyphénylène sulfone (PPS), le polyester, le polybutylène téréphtalate (PBT). Préférentiellement la matière plastique pourra être le polypropylène, pour des raisons de faible densité, de coût et de recyclabilité.

Selon une forme de réalisation particulière de l'invention, la matière plastique peut comprendre tout ou une partie de matière recyclée ou régénérée selon les critères définis par exemple dans les chartes environnementales de l'industrie automobile.

Selon encore une autre forme de réalisation particulière de l'invention, une (ou des) charge(s) renforçante(s) de tout type peut (peuvent) être ajoutée(s) à la matière plastique. A cet égard on citera par exemple des charges minérales ou organiques, des nanoparticules, des charges conductrices, des fibres de verre longues ou courtes, des fibres organiques, des fibres naturelles.

Avantageusement l'utilisation de matières thermoplastiques à base de fibres naturelles et/ou organiques permet d'alléger les pièces moulées.

Il est aussi possible d'utiliser un mélange de charges, ceci afin de limiter les risques de déformation lors du moulage. Par exemple, avec de la fibre de verre il est possible d'utiliser une charge comme par exemple du talc ou du carbonate de calcium.

Des matières thermoplastiques incorporant des charges peuvent être choisies par exemple dans la gamme Thermofil^{®} de Sumika Polymer Compounds.

Selon encore un autre mode de réalisation de l'invention, il est possible d'ajouter à la matière thermoplastique au moins une charge ignifugeante, avec ou sans halogènes, afin d'ajouter une protection au feu.

Un grand avantage de l'invention est qu'elle permet la réalisation de collecteurs, en matériau thermoplastique, de grandes dimensions, éventuellement plats, ne présentant pas de déformations résiduelles après moulage. A la connaissance de la demanderesse, les techniques classiques d'injection plastique connues de l'art antérieur rendent difficile l'obtention de grands collecteurs plats ne présentant pas de telles déformations résiduelles.

En outre, l'invention permet la réalisation de collecteurs, plats ou paraboliques, intégrant facilement toutes sortes d'éléments rapportés en vue de l'amélioration des performances du panneau solaire. Par exemple il peut être possible d'intégrer à l'intérieur du collecteur selon l'invention un réflecteur solaire, par exemple un réflecteur solaire en forme de logement parabolique dont chaque logement pourra correspondre à un tube de circulation du fluide. Cet élément supplémentaire permet de reproduire et d'améliorer le principe du collecteur parabolique ouvert (sans caisson).

Encore un autre avantage de l'invention est que le procédé qui permet la fabrication des collecteurs selon l'invention, qui est aussi un objet de la présente invention, permet l'intégration directe de fonctions essentielles au bon fonctionnement d'un panneau solaire alors que dans les techniques de l'art antérieur, ces fonctions sont généralement rapportées sur le collecteur après sa fabrication.

Ainsi il est possible d'intégrer directement la fonction isolation par la réalisation de parois moussées en plastique. Avantageusement, un moyen d'isolation ou un moyen de protection thermique des parois, supplémentaires, peuvent être ajoutées si nécessaire.

Il est également possible d'intégrer au cours du moulage du collecteur, un (ou des) moyen(s) de fixation de la vitre d'un panneau solaire thermique, qu'elle soit organique ou minérale, par réalisation par surmoulage de moyens de fixation, par exemple des clips.

II est encore possible d'intégrer au cours du moulage du collecteur, par surmoulage, un (ou des) moyen(s) d'étanchéité comme des joints, par exemple en élastomère, lors du moulage du collecteur (par exemple joints en thermoplastique élastomères comme par exemple en les thermoplastiques oléfiniques vulcanisés dynamiquement (TPV) ou non (TPO) comme par exemple ceux de marques commerciales Espolex® (Sumitomo Chemical) ou Santoprène®^{.}

Il est aussi possible d'intégrer dans le collecteur, un (ou des) moyen(s) d'absorption des rayons solaires par la réalisation d'absorbeurs, par exemple extrudés en matériaux plastiques (Polyphénylène sulphide (PPS), alliage de polyphénylène éther/ polystyrène/butadiène (PPE/PS), Polyamides aromatiques, Polysulfone, polyestersulfones,...) et/ou de films plastiques en surface d'un absorbeur métallique lui-même par exemple en aluminium ou en cuivre).

Il est aussi possible d'intégrer au cours du moulage du collecteur, un (ou des) moyen(s) de fixation du collecteur sur un support, par exemple un toit, avec la possibilité de faire varier l'inclinaison desdits supports pour augmenter l'efficacité du panneau solaire.

Les collecteurs selon l'invention peuvent être colorés dans la masse, par exemple par mélanges-maîtres lors de l'étape de moulage ou par décoration pré-appliquée dans le moule à l'aide d'un film décoratif.

Les collecteurs pouvant prendre toutes les formes désirées, il est aussi possible de réaliser des collecteurs, et donc des panneaux solaires, qui pourront s'intégrer à leur support comme par exemple la façade d'un bâtiment.

Dans le cas des capteurs solaires ayant un collecteur de forme parabolique, le ou les tubes n'étant pas enfermés dans un caisson, le collecteur parabolique peut être également réalisé en matériau plastique allégé ou isolant, recouvert par un film réfléchissant ou absorbant.

Selon encore un autre mode de réalisation de l'invention, et afin d'alléger le panneau solaire thermique, un verre organique peut être utilisé en remplacement du verre minéral. Ce verre organique peut être choisi parmi les polyméthacrylates de méthyle (PMMA), renforcés au choc ou non par d'autres acrylates tels que les acrylates de butyles, ou encore les polycarbonates (PC).

Selon l'invention, le moulage du coffre (entier ou de la plaque constituant le fond) est susceptible d'être obtenu par tout procédé connu qui comprend au moins une étape de moulage du matériau isolant et une étape d'expansion dudit matériau isolant.

A cet égard on citera par exemple
- l'injection thermoplastique classique, préférentiellement à basse pression, comme le procédé SPMold de Sumitomo Chemical. Ce procédé présente le grand avantage d'éviter tout phénomène de déformation après moulage.
- l'injection thermoplastique avec moussage de la matière plastique comme par exemple le procédé SP Foaming. Le moussage de la matière plastique peut être obtenu par ajout d'un agent d'expansion chimique dans la matière plastique à injecter. Ledit agent d'expansion chimique peut être choisi préférentiellement chez les fournisseurs Sekuisi ou Clariant.
- le procédé Dolphin ;
- le procédé Mucell de la société TREXEL, au cours duquel un gaz à l'état supercritique est injecté dans la matière plastique en fusion ;
- le thermoformage de plaques extrudées et moussées par extrusion directe comme par exemple les procédés Sumiceller ou Trocellen.

Avantageusement selon l'invention, on utilisera les techniques SP-Mold et Sumiceller® développées par Sumitomo Chemical.

Selon une variante de l'invention, il est possible d'ajouter, par surmoulage des éléments rapportés au coffre, comme par exemple des clips de blocage, des renforts, ou tout autre élément apte à être obtenu par surmoulage. Une technique préférentielle de surmoulage peut être l'injection thermoplastique de matières plastiques à base de polypropylène.

Selon une autre forme de réalisation de l'invention, les surfaces intérieure et/ou extérieure du collecteur, indépendamment ou simultanément, peuvent-être revêtues d'un matériau destiné à assurer une bonne réflexion et/ou une protection thermique, comme par exemple un film protecteur et/ou un film aluminisé. Selon ce mode de réalisation, le film peut-être apposé par dépôt dans le moule au cours du procédé de moulage par injection ou thermoformage ou par coextrusion dans le cas de collecteurs paraboliques extrudés.

L'invention se rapporte aussi à des panneaux solaires thermiques destinés à chauffer de l'eau ou de l'air ainsi qu'à des panneaux solaires photovoltaïques, comprenant au moins un collecteur selon l'invention.

Un des grands avantages des panneaux solaires thermiques selon l'invention réside dans le fait qu'ils peuvent être réalisés à partir de 3 éléments seulement (le collecteur selon l'invention, le circuit d'eau ou d'air et. la plaque de verre organique ou minéral), ce qui induit une réduction significative du temps d'assemblage du panneau, ainsi qu'une réduction significative du poids (de 10 à 80 %) selon les fonctions intégrées dans le collecteur. On notera que l'utilisation d'un verre organique en remplacement d'un verre minéral peut encore permettre un gain de poids non négligeable (-50%). Ces gains augmentent les facilités de transport ainsi que de pose, liées à la réduction du poids, ce qui engendrent des coûts moindres, ainsi qu'un moindre impact CO₂ sur l'environnement.

L'apparition de ponts thermiques est également fortement réduite dans des collecteurs et/ou des panneaux solaires selon l'invention.

Un autre avantage de l'invention réside dans le fait que les panneaux solaires intégrant un collecteur selon l'invention peuvent être d'épaisseur relativement réduite, l'isolant faisant partie intégrante du coffre.

La facilité de démantèlement (liée au nombre réduit de composants ou sous-ensembles de composants) des collecteurs selon l'invention, facilite le recyclage desdits composants, en particulier avec l'utilisation de matières plastiques à base polypropylène qui ne dégagent pas de substances toxiques.

La réduction de l'impact sur l'environnement liée à la suppression des traitements de surface et peintures du collecteur, la décoration des panneaux pouvant être réalisée par coloration dans la masse ou lamination de films plastiques ou aluminisés, comparée à la solution actuelle de cadres aluminium peints n'est en outre pas négligeable.

Enfin, la liberté de formes que permet la conception de pièces en matières thermoplastiques, doit permettre une meilleure intégration de l'équipement solaire dans son environnement (par exemple, intégration en façades ou sur le toit d'un bâtiment). A cet égard, une possibilité s'offre de concevoir le collecteur comme une boite de forme diverse intégrant de part sa forme, le support du collecteur. Cette boite peut être réalisée à partir d'une plaque de matière plastique moussée qui serait repliée en différents points pour donner la forme voulue. La boite de forme diverse ainsi réalisée peut également intégrer d'autres éléments tels qu'un réservoir-siphon dans le cas de panneau solaire thermique à siphon, d'un boitier de fusibles dans le cas d'un panneau photovoltaïque, d'un boitier de climatiseur ou de pompe à chaleur pour une meilleure intégration de l'ensemble d'équipements additionnels présents actuellement sur un toit d'une maison par exemple.

Avantageusement ledit panneau solaire thermique peut en outre comprendre indépendamment ou simultanément, un ou des support(s) des circuits d'eau ou d'air, un ou des élément(s) de renfort, un ou des support(s) de la plaque de verre, un ou des isolant(s) supplémentaire(s), un ou des absorbeur(s) de chaleur, généralement constitué(s) d'une plaque de métal, ledit absorbeur pouvant être lui-même recouvert d'une matière améliorant ses performances, ledit absorbeur pouvant également être accouplé au circuit d'eau ou d'air.

L'invention a aussi pour objet l'utilisation d'un collecteur selon l'invention pour le montage de panneaux solaires thermiques ou photovoltaïques.

L'Homme du métier comprend que les techniques utilisées dans la présente invention et les dimensions applicables sont des données habituelles dans ces domaines et qu'il n'aura aucun mal à les mettre en oeuvre.

D'autres avantages, buts et caractéristiques de la présente invention ressortiront de la description qui va suivre, faite, dans un but explicatif et nullement limitatif, en regard des dessins annexés dans lesquels:
- la figure 1 présente une vue en coupe d'un coffre selon l'invention ;
- la figure 2 présente une vue en coupe d'un panneau solaire destiné à chauffer de l'eau.
- la figure 3 présente une vue en coupe d'un panneau solaire destiné à chauffer de l'eau, intégrant en outre une isolation supplémentaire.
- la figure 4 présente une vue en coupe d'un panneau solaire destiné à chauffer de l'eau, intégrant en outre un autre collecteur solaire.
- la figure 5 présente une vue en 3 dimensions d'un collecteur selon l'invention en forme de boite.
- la figure 6 présente une vue en 3 dimension et en transparence d'un panneau solaire thermique intégré dans un collecteur tel que représenté à la figure 5.

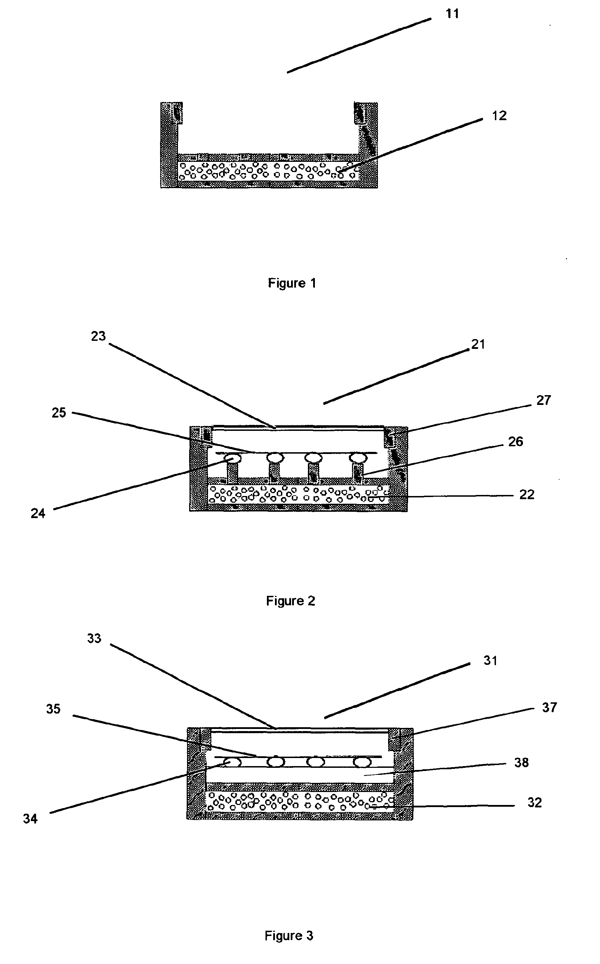

Ainsi par référence aux figures, on observe à la figure 1 une vue en coupe d'un coffre (11) selon l'invention intégrant un isolant (12) dans son fond.

On observe à la figure 2 une vue en coupe d'un panneau solaire thermique destiné à chauffer de l'eau comprenant un coffre selon l'invention (21) intégrant un isolant (22) dans son fond, une plaque de verre (23), un circuit d'eau (24) un absorbeur de chaleur (25), des supports du circuit d'eau (26) et des moyens de support de la plaque de verre (27) surmoulés.

On observe à la figure 3, une vue en coupe d'un panneau solaire thermique selon la figure 2, destiné à chauffer de l'eau, comprenant en outre un isolant supplémentaire (38).

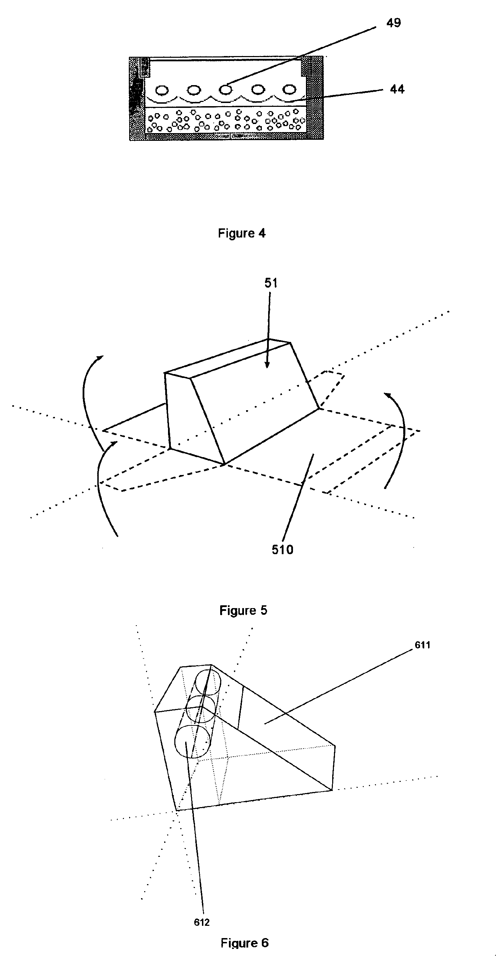

On observe à la figure 4 une vue en coupe d'un panneau solaire thermique selon la figure 2, destiné à chauffer de l'eau comprenant en outre un réflecteur solaire (49) en forme de logement parabolique dont chaque logement pourra correspondre à un tube de circulation du fluide (44).

On observe à la figure 5 une vue en 3 dimensions d'un collecteur selon l'invention en forme de boite (51) et une représentation de la feuille en matière plastique isolante (510) qui par pliage a donné ladite boite. Les flèches indiquent le sens de pliage de la plaque de matière plastique moussée.

On observe à la figure 6 une vue en 3 dimensions d'un panneau solaire installé dans un collecteur selon la figure 5, montrant en transparence un panneau solaire (611) et un réservoir (612).

## Revendications

1. Collecteur moulé, éventuellement isolant, **caractérisé en ce qu'**il est au moins en partie réalisé par moulage d'un matériau plastique isolant expansible.

2. Collecteur selon la revendication 1, **caractérisé en ce que** ledit matériau isolant expansible est une matière plastique expansible, particulièrement expansible en cours de moulage.

3. Collecteur selon l'une quelconque des revendications 1 ou 2, **caractérisé en ce qu'**il comprend un cadre (formant les côtés du collecteur) en matière plastique, éventuellement expansible, sur lequel vient s'appliquer un fond constitué d'une plaque réalisée par moulage d'un matériau plastique isolant expansible.

4. Collecteur selon l'une quelconque des revendications 1 ou 2, **caractérisé en ce qu'**il est monobloc.

5. Collecteur selon l'une quelconque des revendications 1 à 4, **caractérisé en ce que** ledit matériau isolant expansible est choisi parmi le polypropylène (PP), le polyéthylène (PE), le polyamide aliphatique ou aromatique (PA), le mélange de polyphénylène éther (tel que l'alliage polyphénylène éther/polystyrène/butadiène (PPE/PS), l'alliage polyphénylène éther/ polyphénylène sulfone (PPE/PPS), l'alliage polyphénylène éther/polypropylène (PPE/PP), l'alliage polyphénylène éther/polyamide (PPE/PA), le polyéthersulfone (PES), le polyphénylène sulfone (PPS), le polyester, le polybutylène téréphtalate (PBT), préférentiellement le polypropylène.

6. Collecteur selon l'une quelconque des revendications 1 à 5, **caractérisé en ce qu'**une (ou des) charge(s) renforçante(s) et/ou une (ou des) charge(s) ignifugeante(s) est (sont) ajoutée(s) à la matière plastique.

7. Collecteur selon la revendication 6, **caractérisé en ce que** la charge renforçante est choisie parmi des charges minérales ou organiques, des nanoparticules, des charges conductrices, des fibres de verre longues ou courtes, des fibres organiques, des fibres naturelles, préférentiellement des fibres naturelles et/ou organiques

8. Collecteur selon l'une quelconque des revendications 1 à 7, **caractérisé en ce qu'**il comprend en outre, simultanément ou indépendamment, un réflecteur solaire, un moyen d'isolation ou un moyen de protection thermique des parois, un ou des moyens de fixation d'une vitre, un (ou des) moyen(s) d'étanchéité, un (ou des) moyen(s) d'absorption des rayons solaires, un (ou des) moyen(s) de fixation du collecteur sur un support.

9. Collecteur selon l'une quelconque des revendications 1 à 7, **caractérisé en ce qu'**il est susceptible d'être obtenu par injection thermoplastique classique, préférentiellement à basse pression, (procédé SPMold de Sumitomo Chemical), injection thermoplastique avec moussage de la matière plastique (procédé SP Foaming), le procédé Dolphin, le procédé Mucell, le thermoformage de plaques extrudées et moussées par extrusion directe (procédés Sumiceller ou Trocellen).

10. Collecteur selon la revendication 9, **caractérisé en ce qu'**il est susceptible d'être obtenu par les techniques SP-Mold et Sumiceller®.

11. Panneau solaire thermique ou photovoltaïque ou mixte comprenant au moins un collecteur tel que décrit à l'une quelconque des revendications 1 à 10.

12. Panneau solaire thermique selon la revendication 10, **caractérisé en ce qu'**il comprend en outre un circuit de circulation d'eau et une plaque translucide.
